# FASCICULE DE BREVET EUROPEEN

(11) **EP 1 338 484 B1**
(45) Date de publication et mention de la délivrance du brevet: **29.11.2006**
(21) Numéro de dépôt: 03290204.1
(22) Date de dépôt: 28.01.2003
(51) Int. Cl.: B60R 21/34

(54) **Dispositif de protection des piétons en cas de choc frontal avec une véhicule automobile et véhicule equipé d'un tel dispositif**
Aufprallschutzsystem für Fussgänger und damit ausgestattetes Fahrzeug
Protection device for pedestrians in case of impact with a vehicle and a vehicle equipped with such a device

(30) Priorité: 21.02.2002 FR 0202181
(43) Date de publication de la demande: 27.08.2003
(73) Titulaire: Peugeot Citroën Automobiles S.A., 78140 Vélizy Villacoublay (FR)
(72) Inventeur: Lavernhe, Jérome Christian Guy, 78000 Versailles (FR)
(74) Mandataire: Robert, Jean-François

(56) Documents cités:
- DE-A- 19 712 961
- DE-A- 19 922 454
- US-A1- 2002 011 365

## Description

La présente invention concerne un dispositif de protection des piétons en cas de choc frontal avec un véhicule automobile.

Elle se rapporte plus particulièrement à un véhicule automobile comprenant des moyens d'élévation de la partie arrière du capot aptes à être activés lorsqu'un choc piéton est détecté dans la partie frontale du véhicule, de manière à éloigner la zone d'impact entre la tête du piéton et le capot des éléments rigides situés sous le capot, afin de diminuer la gravité des chocs du piéton sur le capot, notamment au niveau de la tête. On notera qu'un capot pourvu de tels moyens d'élévation est couramment désigné « capot actif » par l'homme de l'art.

En cas de choc frontal d'un véhicule automobile avec un piéton, la tête du piéton vient en général heurter violemment le capot. Lors de l'impact de la tête du piéton sur le capot, il se produit un enfoncement du capot jusqu'à un impact éventuel avec des éléments rigides situés sous le capot tels que la batterie, des éléments porteurs... De même, il peut se produire un impact direct avec des zones rigides du capot. Ces impacts contre les éléments rigides constituent la cause principale des décès ou des blessures graves des piétons renversés.

On connaît des dispositifs de protection des piétons comprenant des moyens d'élévation de la partie arrière du capot ne pouvant servir qu'une seule fois ou dont la réutilisation ultérieure impose le remplacement de pièces coûteuses et/ou une intervention lourde en service après-vente pour remettre ces moyens d'élévation en état d'opérer une nouvelle fois en cas de besoin.

Le document DE 197 12 961 A1 décrit un tel capot dont la partie arrière est reliée à un levier d'élévation via deux biellettes, ledit levier étant articulé dans sa partie avant sur la structure du véhicule, et dont la partie arrière est susceptible d'être relevée via des moyens d'élévation interposés entre la structure et le levier d'élévation. Les dimensions structurelles et de fonctionnement de ce dispositif sont toutefois relativement importantes ; notamment l'ouverture du capot par l'avant en situation normale suppose l'élévation de sa partie arrière via les biellettes.

Le but de la présente invention est de pallier les inconvénients précédents en proposant un dispositif de protection des piétons particulièrement adapté aux véhicules devant satisfaire des critères de réparabilité sévères et pour lesquels les moyens d'élévation, après activation, doivent de nouveau être remis en état de fonctionnement, de façon relativement aisée.

A cet effet, la présente invention concerne un dispositif de protection des piétons en cas de choc frontal avec un véhicule automobile comprenant des moyens d'élévation de la partie arrière du capot aptes à être activés lorsqu'un choc piéton est détecté dans la partie frontale du véhicule, de manière à éloigner la zone d'impact entre la tête du piéton et le capot des éléments rigides situés sous le capot, caractérisé en ce que les moyens d'élévation sont conformés pour être réarmés manuellement suite à leur activation, de façon à être de nouveau opérationnels.

Le dispositif de protection des piétons suivant l'invention peut également comporter une ou plusieurs des caractéristiques suivantes :
- les moyens d'élévation comprennent un manchon fermé à ses deux extrémités par une paire de flasques reliés axialement dont l'un au moins est monté à rotation avec ledit manchon autour de son axe longitudinal et peut pivoter par rapport au manchon depuis une position angulaire initiale dans laquelle il peut être maintenu en position via des moyens de blocage débrayables, jusqu'à une position angulaire finale, vers laquelle il peut être entraîné via des moyens de rappel interposés entre le manchon et le flasque,
- le manchon est prolongé à l'une de ses extrémités par une portion cylindrique logée dans le manchon de façon à former un ourlet intérieur, tandis qu'une douille est montée coulissante axialement par rapport au manchon et/ou la portion cylindrique, dans l'espace séparant radialement le corps du manchon de sa portion cylindrique intérieure,
- un palier monté pivotant à l'intérieur de la portion cylindrique, est lié au flasque par des moyens assurant une liaison pivot à sens unique de rotation, tels qu'une roue à rochet,
- une pluralité de billes aptes à se déplacer dans des perçages correspondants formés radialement dans la portion cylindrique peuvent occuper une première position de blocage, dans laquelle les billes sont partiellement engagées dans des logements concaves respectifs du palier, prolongeant radialement les perçages, de façon à empêcher le pivotement relatif du flasque par rapport au manchon, et une seconde position de déblocage dans laquelle les billes sont évacuées des logements du palier, de façon à autoriser le pivotement relatif du manchon par rapport au flasque, en considérant que le passage des billes de leur position de blocage à leur position de déblocage correspond au débrayage des moyens de blocage et corrélativement à l'activation des moyens d'élévation,
- la douille est conformée de façon à coulisser axialement par rapport au manchon depuis une position axiale initiale, dans laquelle la douille coopère en butée avec les billes de façon à les emprisonner dans leur position de blocage, et une position axiale finale, dans laquelle les billes peuvent au moins partiellement être introduites dans des zones d'évacuation ménagées radialement dans la douille, de façon à se présenter dans leur position de déblocage,
- la douille peut être maintenue dans sa position axiale initiale par l'attraction d'un électro-aimant ayant l'effet d'attraction d'un aimant permanent, tandis qu'un signal électrique reçu par l'électro-aimant aux fins d'inhiber cet effet peut libérer la douille afin de la disposer dans sa position axiale finale, sous l'action de moyens de rappel, tels qu'un ressort de compression,
- les moyens de rappel sont constitués d'un ressort à au moins une lame ayant la forme générale d'un U dont la partie centrale épouse partiellement la surface extérieure du manchon tandis que les extrémités libres du ressort coopèrent en appui sur deux axes sensiblement parallèles au manchon, solidaires respectivement du manchon et de l'un au moins des flasques, ces deux axes étant reliés au manchon et au flasque par deux bras de levier correspondants de sorte que l'action du ressort tende à écarter lesdits axes l'un de l'autre lorsque les moyens de blocage empêchant le pivotement du flasque par rapport au manchon sont débrayés,
- l'un des axes est monté à rotation sur la structure du véhicule tandis que l'autre supporte le capot ou un élément adjacent sur lequel le capot est monté pivotant,
- des moyens de déplacement manuels de la douille sont prévus pour la ramener dans sa position axiale initiale, suite à une activation des moyens d'élévation,
- les moyens de déplacement manuels de la douille comprennent une fenêtre ménagée dans le corps du manchon, par laquelle un outillage peut être acheminé pour repousser la douille vers sa position axiale initiale,

L'invention concerne également un véhicule automobile comprenant un dispositif de protection des piétons ayant les caractéristiques précédentes.

Les caractéristiques de l'invention mentionnées ci-dessus, ainsi que d'autres, apparaîtront plus clairement à la lecture de la description suivante d'un mode de réalisation, en se référant aux dessins annexés sur lesquels :
- la figure 1 est une vue schématique de la partie avant d'un véhicule automobile indiquant la localisation des moyens d'élévation appartenant au dispositif de protection des piétons selon l'invention.
- la figure 2 est une vue d'un détail de réalisation de la figure 1, illustrant les moyens d'élévation de la partie arrière du capot selon l'invention,
- la figure 3 est une vue en perspective des moyens d'élévation de la figure 2.
- les figures 4A et 4B sont des vues suivant la ligne de coupe A-A des moyens d'élévation de la figure 2, respectivement avant et après activation.

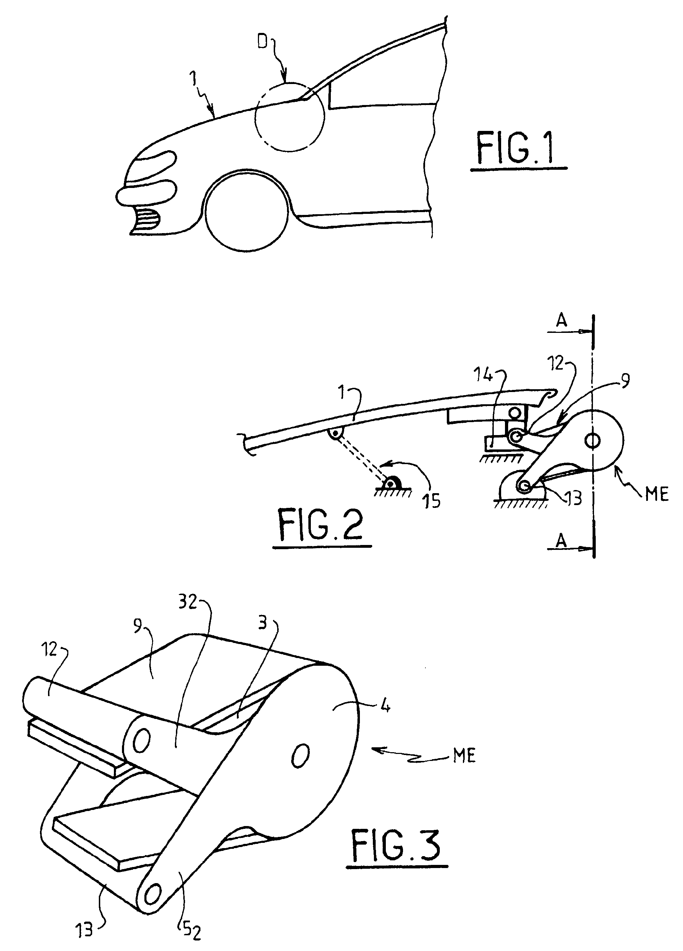

On a représenté à la figure 1 un véhicule automobile pourvu d'un capot 1.

Selon l'invention, le véhicule est équipé d'un dispositif de protection des piétons en cas de choc frontal. En référence à la figure 1, ce dispositif comprend des moyens d'élévation ME situés dans la zone D, de la partie arrière du capot 1 aptes à être activés lorsqu'un choc piéton est détecté dans la partie frontale du véhicule. Une vue détaillée de ces moyens d'élévation ME est représentée à la figure 2.

Par souci de clarté dans la description, à chaque fois qu'il sera fait référence aux moyens d'élévation ME et à ses éléments constitutifs, il faudra bien entendu comprendre que ces moyens d'élévation ME peuvent être disposés en double sur le véhicule, c'est à dire sur chacun de ses côtés, par exemple au voisinage des articulations classiques reliant le capot 1 à la structure du véhicule.

On ne s'étendra pas sur les moyens de détection de l'impact en partie frontale du véhicule. Ces moyens, tout comme les moyens de traitement et de commande pilotant électriquement les moyens d'élévation ME, sont classiques et parfaitement connus de l'homme de l'art.

Selon l'invention, les moyens d'élévation ME comprennent un manchon 3, de forme générale cylindrique, fermé à ses extrémités par une paire de flasques 4, 5. Ces derniers 4, 5 sont reliés axialement et montés à rotation par rapport au manchon 3.

Les flasques 4, 5 peuvent pivoter par rapport au manchon 3 depuis une position angulaire initiale dans laquelle ils peuvent être maintenus en position via des moyens de blocages 6-8 débrayables, jusqu'à une position angulaire finale, vers laquelle ils peuvent être entraînés via des moyens de rappel 9 interposés entre le manchon 3 et les flasques 4, 5, comme cela sera décrit ci-après.

Ces moyens de rappel 9 sont constitués d'un ressort 9 à lames, comptant par exemple deux lames, ayant la forme générale d'un U. La partie centrale de ce U épouse au moins partiellement la surface cylindrique extérieure du manchon 3 tandis que les extrémités libres du ressort 9 coopèrent en appui sur deux axes 12, 13 sensiblement parallèles au manchon 3, reliés respectivement au manchon 3 et aux flasques 4, 5, de sorte que l'action du ressort 9 à lames tende à écarter les axes 12, 13 l'un de l'autre (figures 2 et 3). On notera que les axes 12, 13 sont raccordés respectivement au manchon 3 et aux flasques 4, 5, via respectivement une première paire 32 de bras de levier et une seconde paire 52 de bras de levier. La seconde paire 52 de bras de levier peut être constituée par des prolongements respectifs formés sur chacun des flasques 4, 5, comme cela est visible aux figures 2 et 3.

Etant donné que l'axe 13 prend appui sur la structure du véhicule, en étant articulé sur celle-ci, et que l'axe 12 supporte les charnières du capot 1 ou un élément adjacent 14 sur lequel le capot 1 est monté pivotant (figure 2), on comprendra que l'écartement relatif des axes 12, 13, provoque une élévation correspondante de la partie arrière du capot 1.

On comprendra que le pivotement des flasques 4, 5 est déclenché par le débrayage des moyens de blocages 6-8, correspondant à l'activation des moyens d'élévation ME.

Considérons maintenant les moyens de blocage 6-8 débrayables prévus à l'intérieur du boîtier formé par le manchon 3 et les flasques 4, 5.

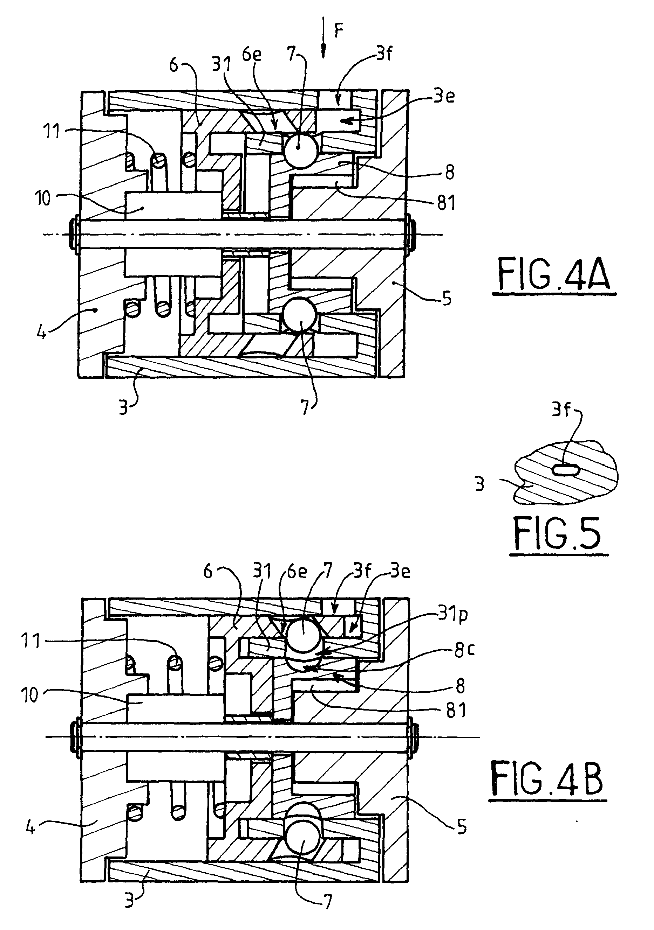

En référence aux figures 4A et 4B, le manchon 3 est prolongé à l'une de ses extrémités par une portion cylindrique 31, logée dans le manchon 3 de façon à former un ourlet intérieur. On notera qu'un espace 3e, de forme générale cylindrique, est prévu pour séparer radialement le corps extérieur du manchon 3 de cette portion cylindrique 31. Ainsi, une douille 6 montée coulissante axialement par rapport au manchon 3 et/ou la portion cylindrique 31 peut venir occuper cet espace 3e plus ou moins complètement en se déplaçant.

On notera également qu'un palier 8 est monté pivotant à l'intérieur de la portion cylindrique 31, ce palier 8 étant lié à l'un 5 des flasques 4, 5 par des moyens 81 assurant une liaison pivot à sens unique de rotation. Une telle liaison, du type roue à rochet permet en effet un entraînement dans un sens donné de rotation tandis que la liaison est libre dans le sens inverse. On précisera que l'entraînement entre le palier 8 et le flasque 5 est assuré dans le sens correspondant au pivotement des flasques 4, 5 vers leur position angulaire finale, tendant à écarter les axes 12, 13 l'un de l'autre.

Par ailleurs, les moyens de blocage 6-8 comprennent une pluralité de billes 7 aptes à se déplacer dans des perçages 31p correspondants formés radialement dans la portion cylindrique 31 évoquée précédemment. Les couples billes-perçages peut être répartis sur la circonférence de la portion cylindrique 31. Dans une variante de réalisation, une seule bille et un perçage associé peuvent être prévus et s'avérer suffisants pour le fonctionnement des moyens de blocage.

En se déplaçant dans leur perçage respectif, les billes 7 peuvent occuper une première position de blocage, dans laquelle les billes 7 sont partiellement engagées dans des logements concaves 8c respectifs du palier 8, prolongeant radialement les perçages 31p, de façon à empêcher le pivotement relatif du flasque 5 par rapport au manchon 3, vers sa position angulaire finale, c'est à dire dans le sens tendant à écarter les axes 12, 13 l'un de l'autre (figure 4A). Lorsque les billes 7 sont partiellement engagées dans ces logements 8c, elles sont disposées à cheval entre le perçage 31 et le logement 8c, de façon à former un obstacle s'opposant au pivotement relatif du flasque 5 et du manchon 3.

On notera que les logements concaves 8c peuvent peuvent être constitués par des creux de forme sphérique.

A l'opposé, les billes 7 peuvent occuper une seconde position de déblocage dans laquelle les billes 7 sont évacuées des logements 8c du palier 8, de façon à autoriser le pivotement relatif du manchon 3 par rapport au palier 8 et au flasque 5 (figure 5A). Bien évidemment, on comprendra que le passage des billes 7 de leur position de blocage à leur position de déblocage correspond au débrayage des moyens de blocage 6-8.

Pour commander le positionnement de ces billes, la douille 6 est conformée de façon à coulisser axialement par rapport au manchon 3 depuis une position axiale dans laquelle la douille 6 coopère en butée avec les billes 7 de façon à les emprisonner dans leur position de blocage (figure 4A), et une position axiale finale, dans laquelle les billes 7 peuvent être introduites dans des zones d'évacuation 6e ménagées radialement dans la douille 6, de façon à se présenter dans leur position de déblocage (figure 4B). Ces zones d'évacuation 6e peuvent être formées par des alésages formés radialement dans le corps de la douille 6. Comme illustré aux figures 4A et 4B, ces alésages 6e peuvent être inclinés par rapport à l'axe longitudinal de la douille 6, par exemple d'un angle de l'ordre de 45°, de sorte que chaque bille 7 s'introduise progressivement dans l'alésage 6e correspondant, en étant guidée au fur et à mesure du coulissement de la douille 6 vers sa position axiale finale.

Le maintien de la douille dans sa position axiale initiale est assuré par un électro-aimant 10 représenté aux figures 4A et 4B. Cet électro-aimant a l'effet d'un aimant permanent apte à maintenir la douille plaquée contre lui dans sa position axiale initiale. Lorsqu'un signal électrique est reçu par cet électro-aimant 10, l'effet d'attraction de l'aimant permanent est inhibé, de sorte que la douille n'est plus soumise qu'à l'action d'un ressort de compression 11 agissant sur elle pour la faire coulisser de sa position axiale initiale vers sa position axiale finale.

Dans un mode de réalisation illustré aux figures 4A et 4B, l'électro-aimant 10 est supporté par l'un 4 des flasques 4, 5. Ce flasque 4 offre également une surface d'appui et/ou de guidage au ressort 11.

Avantageusement, les moyens d'élévation ME suivant l'invention sont conformés pour être réarmés manuellement suite à leur activation, de façon à être de nouveau opérationnels. C'est à dire qu'après une activation, ils peuvent être remis dans leur état initial sans changement de pièce et par une intervention manuelle relativement simple.

Après avoir été débrayés lors de l'activation des moyens d'élévation ME, les moyens de blocage 6-8 pourront en effet être remis manuellement en état de bloquer à nouveau en rotation les flasques 4, 5 par rapport au manchon 3.

Des moyens de déplacement manuels de la douille 6 sont en effet prévus pour la ramener dans sa position axiale initiale. Dans un mode de réalisation, ces moyens de déplacement peuvent comprendre une fenêtre 3f ménagées dans le corps du manchon 3 (figures 4A, 4B et 5), par laquelle un opérateur peut introduire un outil classique, du type tournevis, afin de pousser la douille 6 jusqu'à une position axiale se trouvant dans le champ d'action de l'électro-aimant 10. Plus précisément cette position axiale est telle que la force d'attraction de l'électro-aimant 10 l'emporte sur la force de compression du ressort 11, de sorte que la douille 6 vient se plaquer contre l'électro-aimant 10, dans sa position axiale initiale. On notera que l'effet d'attraction de l'électro-aimant 10 sera préalablement rétabli, c'est à dire que le signal électrique envoyé à l'électro-aimant pour inhiber cet effet aura été coupé.

Le retour de la douille 6 dans sa position axiale initiale s'accompagne d'un déplacement des billes 6 depuis leur position de déblocage dans les zones d'évacuation 6e jusqu'à leur position de blocage, partiellement à cheval entre les perçages 31p et les logements 8c, ce qui solidarise en rotation le palier 8 et le manchon 3.

Les flasques 4, 5 peuvent ensuite être redisposés dans leur position angulaire initiale par rapport au manchon 3. On comprendra en effet que l'écartement relatif entre les axes 12, 13 doit être remis à sa valeur initiale, c'est à dire que la partie arrière du capot 1 doit être repositionnée de façon classique, tandis que le ressort 9 coopérant avec les axes 12, 13 doit être de nouveau mis en contrainte pour pouvoir coopérer avec les axes 12, 13 en prévision d'une nouvelle activation des moyens d'élévation ME.

Un opérateur agira donc sur les axes 12, 13 pour les rapprocher l'un de l'autre, ce qui provoquera une rotation des flasques 4, 5 par rapport au palier 8 et donc par rapport manchon 3. Les flasques 4, 5 pivote ainsi depuis leur position angulaire finale vers le position angulaire initiale, c'est à dire dans le sens inverse de celui correspondant à l'activation des moyens d'élévation ME. On rappellera que dans ce sens de rotation, la liaison entre le palier 8 et le flasque 5 est une liaison libre autorisant le pivotement des flasques 4, 5 par rapport au manchon 3.

Bien entendu, des moyens complémentaires peuvent être employés pour faciliter l'intervention d'un opérateur lors du réarmement des moyens d'élévation ME. Par exemple un système de biellette amovible 15 représentée en pointillé à la figure 2 peut être prévu pour relier une zone avancée du capot 1 à l'axe 13, de sorte que l'élévation de la partie avant du capot rabaisse par un effet de bras de levier la partie arrière du capot 1 en mettant sous contrainte le ressort 9.

Dans une variante de réalisation de l'invention, les moyens de déplacements manuels de la douille 6 peuvent être constitués par un axe central du boîtier formé par le manchon 3 et les flasques 4, 5, cet axe étant relié à la douille 6 et étant déplacé axialement lors de l'activation des moyens d'élévation ME, de façon à présenter une extrémité sur laquelle un opérateur peut agir directement en pression pour le repositionner dans sa position de départ.

## Revendications

1. Dispositif de protection des piétons en cas de choc frontal avec un véhicule automobile comprenant des moyens d'élévation (ME) de la partie arrière du capot (1) aptes à être activés lorsqu'un choc piéton est détecté dans la partie frontale du véhicule, de manière à éloigner la zone d'impact entre la tête du piéton et le capot (1) des éléments rigides situés sous le capot (1), les moyens d'élévation (ME) étant conformés pour être réarmés manuellement suite à leur activation, de façon à être de nouveau opérationnels, **caractérisé en ce que** les moyens d'élévation (ME) comprennent un manchon (3) fermé à ses deux extrémités par une paire de flasques (4, 5) reliés axialement dont l'un (5) au moins est monté à rotation avec ledit manchon (3) autour de son axe longitudinal et peut pivoter par rapport au manchon (3) depuis une position angulaire initiale dans laquelle il peut être maintenu en position via des moyens de blocage (6-8) débrayables, jusqu'à une position angulaire finale, vers laquelle il peut être entraîné via des moyens de rappel (9) interposés entre le manchon (3) et le flasque (5) les extrémités libres des moyens de rappel (9) coopèrant en appui sur deux axes (12, 13) sensiblement parallèles au manchon (3), reliés respectivement au manchon (3) et aux flasques (4, 5), de sorte que l'action des moyens de rappel (9) tende à écarter les axes (12, 13) l'un de l'autre, lesdits axes (12, 13) étant raccordés respectivement au manchon (3) et aux flasques (4, 5), via respectivement une première paire (32) de bras de levier et une seconde paire (52) de bras de levier, l'axe (13) raccordé au flasques (4, 5) prenant appui sur la structure du véhicule, en étant articulé sur celle-ci, tandis que l'axe (12) raccordé au manchon (3) supporte les charnières du capot (1) ou un élément adjacent (14) sur lequel le capot (1) est monté pivotant, de sorte que l'écartement relatif des axes (12, 13) provoque une élévation correspondante de la partie arrière du capot (1).

2. Dispositif de protection des piétons selon la revendication 1, **caractérisé en ce que** le manchon (3) est prolongé à l'une de ses extrémités par une portion cylindrique (31) logée dans le manchon (3) de façon à former un ourlet intérieur, tandis qu'une douille (6) est montée coulissante axialement par rapport au manchon (3) et la portion cylindrique (31), dans l'espace (3e) séparant radialement le corps du manchon (3) de sa portion cylindrique (31) intérieure.

3. Dispositif de protection des piétons selon la revendication 2, **caractérisé en ce qu'**un palier (8) monté pivotant à l'intérieur de la portion cylindrique (31), est lié au flasque (5) par des moyens (81) assurant une liaison pivot à sens unique de rotation, tels qu'une roue à rochet.

4. Dispositif de protection des piétons selon la revendication 3, **caractérisé en ce qu'**une pluralité de billes (7) aptes à se déplacer dans des perçages (31p) correspondants formés radialement dans la portion cylindrique (31) peuvent occuper une première position de blocage, dans laquelle les billes (7) sont partiellement engagées dans des logements concaves (8c) respectifs du palier (8), prolongeant radialement les perçages (31p), de façon à empêcher le pivotement relatif du flasque (5) par rapport au manchon (3), et une seconde position de déblocage dans laquelle les billes (7) sont évacuées des logements (8c) du palier (8), de façon à autoriser le pivotement relatif du manchon (3) par rapport au flasque (5), en considérant que le passage des billes (7) de leur position de blocage à leur position de déblocage correspond au débrayage des moyens de blocage (6-8) et corrélativement à l'activation des moyens d'élévation (ME).

5. Dispositif de protection des piétons selon la revendication 4, **caractérisé en ce que** la douille (6) est conformée de façon à coulisser axialement par rapport au manchon (3) depuis une position axiale initiale, dans laquelle la douille (6) coopère en butée avec les billes (7) de façon à les emprisonner dans leur position de blocage, et une position axiale finale, dans laquelle les billes (7) peuvent au moins partiellement être introduites dans des zones d'évacuation (6e) ménagées radialement dans la douille (6), de façon à se présenter dans leur position de déblocage.

6. Dispositif de protection des piétons selon la revendication 5, **caractérisé en ce que** la douille (6) peut être maintenue dans sa position axiale initiale par l'attraction d'un électro-aimant (10) ayant l'effet d'attraction d'un aimant permanent, tandis qu'un signal électrique reçu par l'électro-aimant (10) aux fins d'inhiber cet effet peut libérer la douille (6) afin de la disposer dans sa position axiale finale, sous l'action de moyens de rappel (11), tels qu'un ressort de compression.

7. Dispositif de protection des piétons selon l'une quelconque des revendications 1 à 6, **caractérisé en ce que** les moyens de rappel (9) sont constitués d'un ressort à au moins une lame ayant la forme générale d'un U dont la partie centrale épouse partiellement la surface extérieure du manchon (3) tandis que les extrémités libres du ressort (9) coopèrent en appui sur deux axes (12, 13) sensiblement parallèles au manchon (3), solidaires respectivement du manchon (3) et de l'un (5) au moins des flasques (4, 5), ces deux axes (12, 13) étant reliés au manchon (3) et au flasque (5) par deux bras de levier (32, 52) correspondants de sorte que l'action du ressort (9) tende à écarter lesdits axes (12, 13) l'un de l'autre lorsque les moyens de blocage (6-8) empêchant le pivotement du flasque (5) par rapport au manchon (3) sont débrayés.

8. Dispositif de protection des piétons selon la revendication 7, **caractérisé en ce que** l'un (13) des axes (12, 13) est monté à rotation sur la structure du véhicule tandis que l'autre (12) supporte le capot (1) ou un élément adjacent (14) sur lequel le capot est monté pivotant (1).

9. Dispositif de protection des piétons selon l'une quelconque des revendications 5 à 8, **caractérisé en ce que** des moyens de déplacement manuels de la douille (6) sont prévus pour la ramener dans sa position axiale initiale, suite à une activation des moyens d'élévation (ME).

10. Dispositif de protection des piétons selon la revendication 9, **caractérisé en ce que** les moyens de déplacement manuels de la douille (6) comprennent une fenêtre (3f) ménagée dans le corps du manchon (3), par laquelle un outillage peut être acheminé pour repousser la douille (6) vers sa position axiale initiale.

11. Véhicule automobile, **caractérisé en ce qu'**il comprend un dispositif de protection des piétons selon l'une quelconque des revendications précédentes.

## Claims

1. Protection device for pedestrians in the event of frontal impact with a motor vehicle comprising means (ME) for raising the rear portion of the bonnet (1) capable of being activated when a pedestrian impact is detected in the frontal portion of the vehicle, so as to move the impact zone between the head of the pedestrian and the bonnet (1) away from the rigid elements located under the bonnet (1), the raising means (ME) being shaped so as to be manually reset following their activation, so as to be operational once more, **characterised in that** the raising means (ME) comprise a sleeve (3) closed at its two ends by a pair of flanges (4, 5) connected axially, at least one of which (5) is mounted in rotation with said sleeve (3) about its longitudinal axis and can pivot with respect to the sleeve (3) from an initial angular position in which it can be held in position by disconnectable locking means (6-8), as far as a final angular position, towards which it can be driven by return means (9) interposed between the sleeve (3) and the flange (5), the free ends of the return means (9) co-operating while bearing on two pins (12, 13) substantially parallel with the sleeve (3), connected respectively to the sleeve (3) and the flanges (4, 5), so that the action of the return means (9) tends to move the pins (12, 13) away from one another, said pins (12, 13) being connected respectively to the sleeve (3) and the flanges (4, 5), via a first pair (32) of lever arms and a second pair (52) of lever arms respectively, the pin (13) connected to the flanges (4, 5) bearing on the structure of the vehicle, being articulated thereto, while the pin (12) connected to the sleeve (3) supports the hinges of the bonnet (1) or an adjacent element (14) on which the bonnet (1) is mounted so as to pivot, so that the relative spacing of the pins (12, 13) causes the rear portion of the bonnet (1) to be raised accordingly.

2. Protection device for pedestrians according to Claim 1, **characterised in that** the sleeve (3) is extended at one of its ends by a cylindrical portion (31) housed in the sleeve (3) so as to form an inner hem, while a bush (6) is mounted sliding axially relative to the sleeve (3) and the cylindrical portion (31), in the space (3rd) radially separating the body of the sleeve (3) from its inner cylindrical portion (31).

3. Protection device for pedestrians according to Claim 2, **characterised in that** a bearing (8) mounted pivoting within the cylindrical portion (31) is linked to the flange (5) by means (81) ensuring a pivot link with a single direction of rotation, such as a ratchet wheel.

4. Protection device for pedestrians according to Claim 3, **characterised in that** a plurality of balls (7) capable of being displaced in corresponding bore holes (31 p) formed radially in the cylindrical portion (31) can occupy a first locking position, in which the balls (7) are partly engaged in respective concave housings (8c) of the bearing (8), radially extending the bore holes (31 p), so as to prevent the relative pivoting of the flange (5) with respect to the sleeve (3), and a second, unlocking position in which the balls (7) are removed from the housings (8c) of the bearing (8), in order to allow the sleeve (3) to pivot relative to the flange (5), while considering that the passage of the balls (7) from their locking position to their unlocking position corresponds to the disconnection of the locking means (6-8) and correlatively to the activation of the raising means (ME).

5. Protection device for pedestrians according to Claim 4, **characterised in that** the bush (6) is shaped so as to slide axially with respect to the sleeve (3) from an initial axial position, in which the bush (6) co-operates stopped against the balls (7) so as to capture them in their locking position, and a final axial position, in which the balls (7) can be introduced at least partly into evacuation zones (6e) made radially in the bush (6), so as to be in their unlocking position.

6. Protection device for pedestrians according to Claim 5, **characterised in that** the bush (6) can be held in its initial axial position through the attraction of an electromagnet (10) having the attraction effect of a permanent magnet, while an electrical signal received by the electromagnet (10) for the purposes of inhibiting this effect can release the bush (6) in order to place it in its final axial position, by the action of return means (11) such as a compression spring.

7. Protection device for pedestrians according to any one of Claims 1 to 6, **characterised in that** the return means (9) are constituted by a spring with at least one blade, generally U-shaped, the central portion of which partly fits against the outer surface of the sleeve (3) while the free ends of the spring (9) co-operate by bearing against two pins (12, 13) substantially parallel to the sleeve (3), integral respectively with the sleeve (3) and with at least one (5) of the flanges (4, 5), these two pins (12, 13) being connected to the sleeve (3) and to the flange (5) by two corresponding lever arms (32, 52) so that the action of the spring (9) tends to move said pins (12, 13) away from one another when the locking means (6-8) preventing the flange (5) from pivoting with respect to the sleeve (3) are disconnected.

8. Protection device for pedestrians according to Claim 7, **characterised in that** one (13) of the pins (12, 13) is mounted in rotation on the structure of the vehicle while the other (12) supports the bonnet (1) or an adjacent element (14) on which the bonnet is mounted so as to pivot (1).

9. Protection device for pedestrians according to any one of Claims 5 to 8, **characterised in that** manual means for displacing the bush (6) are provided so as to return it to its initial axial position, following an activation of the raising means (ME).

10. Protection device for pedestrians according to Claim 9, **characterised in that** the manual means for displacing the bush (6) comprise a window (3f) made in the body of the sleeve (3), through which tools can be routed in order to push the bush (6) back to its initial axial position.

11. Motor vehicle, **characterised in that** it comprises a protection device for pedestrians according to any one of the preceding claims.

## Patentansprüche

1. Vorrichtung zum Schutz von Fußgängern bei einem Frontalaufprall auf ein Kraftfahrzeug, mit Mitteln zum Anheben (ME) des hinteren Abschnitts der Motorhaube (1), die aktiviert werden können, wenn ein Aufprall eines Fußgängers im vorderen Abschnitt des Fahrzeugs festgestellt wurde, sodass der Bereich, in dem der Kopf des Fußgängers auf die Motorhaube (1) aufschlägt, von den starren Elementen unter der Motorhaube (1) entfernt wird, wobei sich die Hebemittel (ME) nach ihrer Aktivierung manuell zurückstellen lassen, sodass sie erneut einsatzbereit sind, **dadurch gekennzeichnet, dass** die Hebemittel (ME) eine Hülse (3) aufweisen, die an ihren beiden Enden von einem Paar axial verbundener Flansche (4, 5) verschlossen ist, von denen zumindest einer (5) mit der Hülse (3) um ihre Längsachse drehbar montiert ist und gegenüber der Hülse (3) von einer Anfangs-Winkelposition, in der er von lösbaren Blockiermitteln (6-8) in Position gehalten wird, zu einer End-Winkelposition verschwenken kann, in die er von Rückstellmitteln (9) geführt werden kann, die zwischen der Hülse (3) und dem Flansch (5) angeordnet sind, wobei die freien Enden der Rückstellmittel (9) in Anlage mit zwei Achsen (12, 13) zusammenwirken, die im Wesentlichen zur Hülse (3) parallel und mit dieser beziehungsweise den Flanschen (4, 5) derart verbunden sind, dass die Wirkung der Rückstellmittel (9) darauf zielt, die Achsen (12, 13) auseinander zu spreizen, wobei die Achsen (12, 13) mit der Hülse (3) beziehungsweise den Flanschen (4, 5) über ein erstes Paar von Hebelarmen (32) beziehungsweise ein zweites Paar von Hebelarmen (52) verbunden sind, wobei die mit den Flanschen (4, 5) verbundene Achse (13) am Aufbau des Fahrzeugs anliegt und an diesem angelenkt ist, während die mit der Hülse (3) verbundene Achse (12) die Scharniere der Motorhaube (1) oder ein angrenzendes Element (14) trägt, an dem die Motorhaube (1) verschwenkbar befestigt ist, sodass das Auseinanderspreizen der Achsen (12, 13) ein entsprechendes Anheben des hinteren Abschnitts der Motorhaube (1) bewirkt.

2. Vorrichtung zum Schutz von Fußgängern nach Anspruch 1, **dadurch gekennzeichnet, dass** die Hülse (3) an einem ihrer Enden von einem in ihr angeordneten zylindrischen Abschnitt (31) derart verlängert wird, dass ein innerer Saum gebildet wird, während ein Ring (6) axial gegenüber der Hülse (3) und dem zylindrischen Abschnitt (31) verschiebbar in dem Raum (3e) montiert ist, der den Körper der Hülse (3) radial von seinem inneren zylindrischen Abschnitt (31) trennt.

3. Vorrichtung zum Schutz von Fußgängern nach Anspruch 2, **dadurch gekennzeichnet, dass** ein Lager (8), das innerhalb des zylindrischen Abschnitts (31) verschwenkbar montiert ist, durch Mittel (81) mit dem Flansch (5) verbunden ist, die für eine Schwenkverbindung mit nur einer Drehrichtung sorgen, wie beispielsweise ein Schieberad.

4. Vorrichtung zum Schutz von Fußgängern nach Anspruch 3, **dadurch gekennzeichnet, dass** mehrere Kugeln (7), die sich in entsprechenden, radial im zylindrischen Abschnitt (31) vorgesehenen Bohrungen (31p) bewegen können, eine erste Blockierposition einnehmen können, in der die Kugeln (7) teilweise in konkave Aufnahmen (8c) des Lagers (8) eingefügt sind, welche die Bohrungen (31p) radial fortsetzen, sodass das relative Verschwenken des Flansches (5) gegenüber der Hülse (3) verhindert wird, sowie eine zweite Freigabeposition, in der die Kugeln (7) die Aufnahmen (8c) des Lagers (8) verlassen haben, sodass das relative Verschwenken der Hülse (3) gegenüber dem Flansch (5) möglich ist, wobei der Übergang der Kugeln (7) von ihrer Blockierposition in ihre Freigabeposition dem Lösen der Blockiermittel (6-8) und korrelativ der Aktivierung der Hebemittel (ME) entspricht.

5. Vorrichtung zum Schutz von Fußgängern nach Anspruch 4, **dadurch gekennzeichnet, dass** der Ring (6) so ausgebildet ist, dass er sich axial gegenüber der Hülse (3) von einer axialen Ausgangsposition, in der er in Anschlag mit den Kugeln (7) derart zusammenwirkt, dass diese in ihrer Blockierposition eingeschlossen sind, in eine axiale Endposition bewegen kann, in der die Kugeln (7) zumindest teilweise in radial im Ring (6) vorgesehene Räumungsbereiche (6e) geführt werden können, sodass sie sich in ihrer Freigabeposition befinden.

6. Vorrichtung zum Schutz von Fußgängern nach Anspruch 5, **dadurch gekennzeichnet, dass** der Ring (6) in seiner axialen Anfangsposition durch die Anziehung eines Elektromagneten (10) gehalten werden kann, der die Anziehungskraft eines Permanentmagneten besitzt, wobei ein elektrisches Signal, das der Elektromagnet (10) erhält, um diese Wirkung zu hemmen, den Ring (6) freigeben kann, um ihn unter der Wirkung von Rückstellmitteln (11), wie beispielsweise eine Kompressionsfeder, in seiner axialen Endposition anzuordnen.

7. Vorrichtung zum Schutz von Fußgängern nach einem der Ansprüche 1 bis 6, **dadurch gekennzeichnet, dass** die Rückstellmittel (9) aus einer Feder mit mindestens einem Blatt bestehen, die im Wesentlichen die Form eines U besitzt, dessen mittlerer Abschnitt sich teilweise an die äußere Fläche der Hülse (3) anschmiegt, während die freien Enden der Feder (9) in Anlage mit zwei Achsen (12, 13) zusammenwirken, die im Wesentlichen parallel zur Hülse (3) und mit dieser beziehungsweise mit mindestens einem (5) der Flansche (4, 5) verbunden sind, wobei die beiden Achsen (12, 13) mit der Hülse (3) und dem Flansch (5) über zwei entsprechende Hebelarme (32, 52) verbunden sind, sodass die Wirkung der Feder (9) darauf zielt, die Achsen (12, 13) auseinander zu spreizen, wenn die Blockiermittel (6-8), die das Verschwenken des Flansches (5) gegenüber der Hülse (3) verhindern, gelöst sind.

8. Vorrichtung zum Schutz von Fußgängern nach Anspruch 7, **dadurch gekennzeichnet, dass** eine (13) der Achsen (12, 13) am Aufbau des Fahrzeugs drehbar montiert ist, während die andere Achse (12) die Motorhaube (1) oder ein angrenzendes Element (14) trägt, an dem die Motorhaube (1) verschwenkbar montiert ist.

9. Vorrichtung zum Schutz von Fußgängern nach einem der Ansprüche 5 bis 8, **dadurch gekennzeichnet, dass** Mittel zum manuellen Verschieben des Rings (6) vorgesehen sind, um ihn nach einer Aktivierung der Hebemittel (ME) in seine axiale Ausgangsposition zurückzuführen.

10. Vorrichtung zum Schutz von Fußgängern nach Anspruch 9, **dadurch gekennzeichnet, dass** die Mittel zum manuellen Verschieben des Rings (6) ein Fenster (3f) im Körper der Hülse (3) aufweisen, durch das ein Werkzeug eingeführt werden kann, um den Ring (6) in seine axiale Ausgangsposition zurückzuschieben.

11. Kraftfahrzeug, **dadurch gekennzeichnet, dass** es eine Vorrichtung zum Schutz von Fußgängern nach einem der vorhergehenden Ansprüche aufweist.
